# EUROPÄISCHE PATENTSCHRIFT

(11) **EP 4 487 675 B1**
(45) Veröffentlichungstag und Bekanntmachung des Hinweises auf die Patenterteilung: **02.09.2026**
(21) Anmeldenummer: 24176977.7
(22) Anmeldetag: 21.05.2024
(51) Int. Cl.: A01F 12/44

(54) **SELBSTFAHRENDER MÄHDRESCHER**
SELF-PROPELLED COMBINE HARVESTER
MOISSONNEUSE-BATTEUSE AUTOMOTRICE

(30) Priorität: 05.07.2023 DE 102023117747
(43) Veröffentlichungstag der Anmeldung: 08.01.2025
(73) Patentinhaber: CLAAS Selbstfahrende Erntemaschinen GmbH, 33428 Harsewinkel (DE)
(72) Erfinder: Vieregge, Christopher, 32694 Dörentrup (DE); Beckmann, Hermann-Konstantin, 32584 Löhne (DE); Diekamp, Andreas, 49176 Hilter (DE)
(74) Vertreter: CLAAS Gruppe

(56) Entgegenhaltungen:
- EP-A1- 3 753 393
- EP-B1- 1 790 208
- DE-A1- 19 624 733
- DE-A1- 2 620 875
- DE-B1- 1 927 262
- US-A- 3 014 485

## Beschreibung

Die vorliegende Erfindung betrifft einen selbstfahrenden Mähdrescher gemäß dem Oberbegriff des Anspruches 1.

Aus der DE 1 927 262 A1 ist ein selbstfahrender Mähdrescher bekannt, der eine Dreschvorrichtung, eine als Hordenschüttler ausgeführte Abscheidevorrichtung, eine Reinigungsvorrichtung sowie eine der Reinigungsvorrichtung nachgeordnete Sauggebläsevorrichtung als Arbeitsaggregate aufweist. Die Siebe der Reinigungsvorrichtung sind in einem Siebgehäuse angeordnet, welches eine Ansaugöffnung aufweist, die den Sieben vorgelagert ist. Das Siebgehäuse bildet einen Prozessraum nur für die darin angeordneten Komponenten der Reinigungsvorrichtung aus. Das Siebgehäuse bildet zur Ansaugung von Luft einen allseitig geschlossenen Kanal aus, durch den von der Sauggebläsevorrichtung Luft angesaugt wird. Das Siebgehäuse ist mit einem zusätzlichen Saugkanal ausgestattet, welcher durch eine im Saugkanal angeordnete Regelklappe bedarfsweise geöffnet oder geschlossen wird, um Staub oder andere Bestandteile von einem anderen Ort innerhalb des Mähdreschers abzusaugen. Hierzu weist der Saugkanal zusätzliche Verzweigungen auf. Nachteilig an diesem Mähdrescher ist, dass die weiteren relevanten Stellen innerhalb des Mähdreschers nur durch das Verlegen zusätzlicher Verzweigungen respektive Saugkanäle erreicht wird, was sich nachteilig auf die Bauraumausnutzung auswirkt. Ein weiterer nachteiliger Aspekt besteht darin, dass das Öffnen der Regelklappe die Reinigungsleistung beeinflusst. Die US3014485A offenbart einen Zyklon-Mähdrescher mit einem Dreschgebläse und einem Sauggebläse sowie mit luftdruckabhängig ansprechenden Luftventilen zur Ausgleichung des Luftstroms.

Die DE 26 41 870 A1 offenbart einen Mähdrescher, welcher eine Dreschvorrichtung, eine als Hordenschüttler ausgeführte Abscheidevorrichtung sowie eine Reinigungsvorrichtung als Arbeitsaggregate aufweist. Oberhalb der Dreschvorrichtung ist eine Sauggebläsevorrichtung angeordnet, welche saugseitig durch einen Windkanal, der sich über die Breite der Dreschvorrichtung, hier der dem Hordenschüttler vorgelagerten Wendetrommel, erstreckt, Staub und dergleichen absaugt und druckseitig der Abscheidevorrichtung zuführt. Nachteilig an diesem Mähdrescher ist, dass durch die Absaugung von Staub und dergleichen oberhalb der Dreschvorrichtung und der anschließenden Abgabe auf den Hordenschüttler lediglich eine Verlagerung der Staubbelastung stattfindet, welche sich zusätzlich auf die unterhalb des Hordenschüttlers angeordneten Komponenten, Vorbereitungsboden, Rücklaufboden sowie die Reinigungsvorrichtung, nachteilig auswirkt.

Ausgehend vom vorstehend genannten Stand der Technik liegt der Erfindung die Aufgabe zugrunde, einen selbstfahrenden Mähdrescher der eingangs genannten Art weiterzubilden, welcher sich durch eine effizientere und bauraumsparende Ausgestaltung zur Absaugung von mehreren innerhalb des Prozessraumes angeordneten Arbeitsaggregaten auszeichnet.

Diese Aufgabe wird erfindungsgemäß durch einen selbstfahrenden Mähdrescher mit den Merkmalen des Anspruches 1 gelöst. Vorteilhafte Weiterbildungen sind Gegenstand der hiervon abhängigen Ansprüche.

Gemäß dem Anspruch 1 wird ein selbstfahrender Mähdrescher vorgeschlagen, der eine Dreschvorrichtung, eine Abscheidevorrichtung, eine Reinigungsvorrichtung sowie eine der Reinigungsvorrichtung nachgeordnete Sauggebläsevorrichtung als Arbeitsaggregate umfasst, die in einem Prozessraum angeordnet sind, der durch zumindest ein Gehäuse gebildet ist, welches wenigstens eines der Arbeitsaggregate abschnittsweise umgibt. Erfindungsgemäß ist vorgesehen, dass dem Prozessraum zumindest eine schaltbare Ventilvorrichtung zugeordnet ist, die dazu ausgeführt und eingerichtet ist, in einer Betriebssituation, in welcher es während des laufenden Betriebs der Sauggebläsevorrichtung zu einer temporären Unterbrechung einer Erntegutverarbeitung durch die übrigen im Prozessraum befindlichen Arbeitsaggregate kommt, von einer geschlossenen Schaltstellung in eine geöffnete Schaltstellung zu wechseln.

Wesentlich ist die Überlegung, dass eine Maschinenreinigung respektive Prozessraumreinigung durch den von der Sauggebläsevorrichtung bereitgestellten Saugluftstrom in Betriebssituationen, in denen temporär kein Erntegut im Prozessraum verarbeitet wird, die Sauggebläsevorrichtung jedoch aktiv ist, ermöglich wird. Indem die zumindest eine schaltbare Ventilvorrichtung in die geöffnete Schaltstellung überführt wird, wird durch die zumindest eine Ventilvorrichtung Luft von außerhalb des Prozessraumes, insbesondere in der Umgebung der zumindest einen Ventilvorrichtung, angesaugt. Eine solche Betriebssituation oder Phase, in welcher es bei laufendem Betrieb der Sauggebläsevorrichtung zu einer temporären Unterbrechung einer Erntegutverarbeitung durch die übrigen im Prozessraum befindlichen Arbeitsaggregate kommt, liegt beispielsweise bei der Vorgewendefahrt vor.

Ein wesentlicher Effekt der Erfindung besteht somit darin, dass die Belastung durch Staub und Kurzstrohpartikel im Prozessraum durch eine gezielte Führung des von der Sauggebläsevorrichtung generierten Saugluftstroms reduziert wird. Hierdurch lässt sich ein durchzuführender Reinigungsvorgang des Mähdreschers, wie er nach einem Erntetag oder bei einem Sortenwechsel erforderlich ist, zumindest beschleunigen.

Insbesondere kann der Wechsel zwischen der geschlossenen Schaltstellung in die geöffnete Schaltstellung für die Dauer der temporären Unterbrechung der Erntegutverarbeitung automatisch erfolgen. Dadurch kann die Bedienperson von einer manuellen Ansteuerung der zumindest einen Ventilvorrichtung entlastet werden. Wesentlich ist dabei, dass durch die automatische Ansteuerung die Zeitfenster, in denen es zu einer temporären Unterbrechung der Erntegutverarbeitung kommt, im Wesentlichen vollständig ausgenutzt werden können.

Gemäß einer bevorzugten Ausführung kann das zumindest eine Gehäuse ein zumindest die Abscheidevorrichtung abschnittsweise umgebendes Aggregatgehäuse sein, welches die darin befindlichen Arbeitsaggregate gegenüber außerhalb dieses Aggregatgehäuses befindlichen Arbeitsaggregaten, insbesondere einem Antriebsmotor, räumlich separiert. Das Aggregatgehäuse dient dabei zusätzlich dem Schutz vor in dem Prozessraum auftretenden Belastungen durch Nichtkornbestandteile, insbesondere Staub und Kurzstrohpartikel, die sich an oder auf außerhalb des Prozessraumes befindlichen Arbeitsaggregaten, wie dem Antriebsmotor, einer Abgasleitung, Komponenten einer Kühlvorrichtung und dergleichen ablagern können.

Bevorzugt kann die zumindest eine Ventilvorrichtung ein Verschlusselement aufweisen, das an einem Ende einer Kolbenstange angeordnet ist, sowie dass am anderen Ende der Kolbenstange ein Kolben angeordnet ist, der in einem Zylindergehäuse geführt ist, wobei der Kolben zumindest kolbenstangenseitig mit einem pneumatischen oder hydraulischen Druck beaufschlagbar ist, um die Ventilvorrichtung zu betätigen. Eine nur kolbenstangenseitige Druckbeaufschlagung ist ausreichend, um durch das Einziehen der Kolbenstange in das Zylindergehäuse die Ventilvorrichtung in die geöffnete Schaltstellung zu überführen. Denkbar ist auch eine Ausführung, bei welcher die Druckbeaufschlagung auf beiden Seiten des Kolbens erfolgt, um die Ventilvorrichtung wechselweise zwischen der geschlossenen Schaltstellung und der geöffneten Schaltstellung zu überführen.

Insbesondere kann auf einer im Wesentlichen horizontal verlaufenden Oberseite des Aggregatgehäuses zumindest eine Öffnung angeordnet sein, welche durch die zumindest eine Ventilvorrichtung durch einen Wechsel zwischen den Schaltstellungen freigebbar und verschließbar ist. Hierdurch wird in geöffneter Schaltstellung der Ventilvorrichtung eine obenseitige Ansaugung erreicht, welche zu einer im Wesentlichen von oben nach unten gerichteten Durchströmung des Prozessraumes führt. Der von der Sauggebläsevorrichtung durch die zumindest eine Öffnung angesaugte Luftstrom kann zumindest Oberflächenbereiche der Arbeitsaggregate innerhalb des Prozessraumes überströmen und dabei sich ablagernden Staub sowie Kurzstrohpartikel mitführen und der Sauggebläsevorrichtung zuführen. Zudem wird in der Luft befindlicher Staub innerhalb des Prozessraums abgesaugt und durch die Sauggebläsevorrichtung nach außen, d.h. außerhalb des Mähdreschers, abgeführt. Die im Wesentlichen horizontal verlaufende Oberseite des Aggregatgehäuses ist die dem Prozessraum abgewandte Seite des Aggregatgehäuses.

Hierzu kann eine im Wesentlichen U-förmige Halterung, die auf der Oberseite des Aggregatgehäuses. Insbesondere lösbar, angeordnet ist, die zumindest eine Öffnung übergreifen.

Dabei kann die Halterung zwei im Wesentlichen vertikal verlaufende Schenkel aufweisen, mit denen die Halterung beabstandet zur Öffnung auf der Oberseite des Aggregatgehäuses angeordnet ist, sowie einen zwischen den beiden im Wesentlichen parallel zur Oberseite des Aggregatgehäuses verlaufenden Steg, auf dessen Oberseite das Zylindergehäuse angeordnet ist und auf dessen der Öffnung zugewandten Unterseite das Verschlusselement angeordnet ist. Bevorzugt weisen die Öffnung und/oder das die Öffnung verschließende Verschlusselement eine im Wesentlichen kreisförmige Außenkontur auf. Hiervon abweichende Formen der Außenkontur von Öffnung und/oder Verschlusselement sind denkbar. Wesentlich ist, dass das Verschlusselement die Öffnung vollständig verschließt bzw. überdeckt. Hierdurch soll ein ungewolltes Ansaugen durch die zumindest eine Ventilvorrichtung vermieden werden.

Insbesondere kann der Mähdrescher eine Steuervorrichtung aufweisen, die mit zumindest einer Detektionseinrichtung, die zur Detektion einer temporären Unterbrechung der Erntegutverarbeitung eingerichtet ist, signaltechnisch verbunden ist, wobei die Steuervorrichtung dazu eingerichtet ist, die zumindest eine Ventilvorrichtung in Abhängigkeit von den Signalen der zumindest einen Detektionseinrichtung anzusteuern. Eine solche Detektionseinrichtung ermöglicht es, die Betriebssituation zu erkennen, in welcher es während des laufenden Betriebs der Sauggebläsevorrichtung zu einer temporären Unterbrechung der Erntegutverarbeitung durch die übrigen im Prozessraum befindlichen Arbeitsaggregate kommt. Die Steuervorrichtung steuert die zumindest eine Ventilvorrichtung in Abhängigkeit von den Signalen der zumindest einen Detektionseinrichtung an, um die für die Dauer der temporären Unterbrechung der Erntegutverarbeitung die Ventilvorrichtung in ihre geöffnete Schaltstellung zu überführen.

Wie weiter oben bereits ausgeführt, tritt beispielsweise während des laufenden Betriebs der Sauggebläsevorrichtung eine temporäre Unterbrechung der Erntegutverarbeitung beim Durchfahren des Vorgewendes auf. Eine weitere Betriebssituation, in welcher es zu einer temporären Unterbrechung der Erntegutverarbeitung kommt, kann der Vorgang des Überladens von im Korntank gebunkerten Erntegut auf einen Ladewagen sein, wenn der Mähdrescher dabei nicht weitergefahren wird, um während des Überladens Erntegut aufzunehmen.

Bevorzugt kann die zumindest eine Detektionseinrichtung, eine optische Vorfelderfassungseinrichtung, ein Schichthöhensensor im Einzugskanal des Mähdreschers, ein Routenplanungssystem, ein Fahrgeschwindigkeitssensor, ein Füllstandsensor und/oder zumindest eine Sensoreinrichtung, die dazu eingerichtet ist, einen Erntegutfluss entlang zumindest eines der im Prozessraum angeordneten Arbeitsaggregate zu detektieren, sein. Mittels der optischen Vorfelderfassungseinrichtung lässt sich die Betriebssituation des Erreichens und des Verlassens des Vorgewendes detektieren, um in Abhängigkeit davon die zumindest eine Ventilvorrichtung anzusteuern. Die Signale des im Einzugskanal vorgesehenen Schichthöhensensors, welcher unter anderem der Bestimmung des Durchsatzes dienen, können alternativ oder zusätzlich von der Steuerungsvorrichtung zur Ansteuerung der zumindest einen Ventilvorrichtung verwendet werden. Alternativ oder zusätzlich können Daten des Routenplanungssystems in Verbindung mit empfangenen Positionsortungsdaten von der Steuerungsvorrichtung zur Ansteuerung der zumindest einen Ventilvorrichtung verwendet werden. Mittels des Fahrgeschwindigkeitssensors und des im oder am Korntank angeordneten Füllstandsensors lässt sich eine Überladesituation detektieren, in welcher der Mähdrescher zur Entleerung des Korntanks steht, d.h. den im Prozessraum angeordneten Arbeitsaggregate temporär kein Erntegut zugeführt wird. Alternativ oder zusätzlich kann die Detektion Überladeposition durch die Position einer Überladevorrichtung in Verbindung mit den Signalen des Fahrgeschwindigkeitssensors kombiniert werden, um zu detektieren, dass temporär kein Erntegut zugeführt wird. Alternativ oder zusätzlich können Signale der zumindest einen Sensoreinrichtung, die dazu eingerichtet ist, einen Erntegutfluss entlang zumindest eines der im Prozessraum angeordneten Arbeitsaggregate zu detektieren, zur Ansteuerung der zumindest einen Ventilvorrichtung verwendet werden. Hierzu käme beispielsweise eine Verlustsensoranordnung in Betracht, welche der Erfassung von Verlustkorn dient, welches von der Reinigungsvorrichtung nach außerhalb des Mähdreschers abgeschieden wird.

Gemäß einer bevorzugten Weiterbildung kann zumindest ein Paar Ventilvorrichtungen oberhalb eines Einlaufbereiches und/oder oberhalb eines Auslaufbereiches der Abscheidevorrichtung angeordnet sein. Insbesondere kann ein oberhalb des Einlaufbereiches angeordnetes Paar Ventilvorrichtungen bezogen auf eine Längsachse des Aggregatgehäuses einen größeren Abstand in Querrichtung aufweisen als ein oberhalb des Auslaufbereiches angeordnetes Paar Ventilvorrichtungen.

Eine Anordnung zumindest eines Paares Ventilvorrichtungen oberhalb des Auslaufbereiches der Abscheidevorrichtung kann dazu dienen, die Verschmutzung von Antriebskomponenten der Abscheidevorrichtung zu reduzieren.

Bevorzugt kann zumindest ein weiteres Paar Ventilvorrichtungen oberhalb der Abscheidevorrichtung im Bereich zwischen dem Einlaufbereich und dem Auslaufbereich der Abscheidevorrichtung angeordnet sein. Dabei kann das zumindest eine weitere Paar Ventilvorrichtungen unterhalb einer liegend auf der Oberseite des Mähdreschers angeordneten Kühlvorrichtung angeordnet sein. Besonders bevorzugt kann das zumindest eine weitere Paar Ventilvorrichtungen unterhalb eines Lüfters der Kühlvorrichtung angeordnet sein. Hierdurch kann Ablagerungen auf der Oberseite des Aggregatgehäuses und unterhalb der Kühlvorrichtung begegnet werden, indem diese wiederholt während des Betriebes des Mähdreschers abgesaugt werden.

Weiter bevorzugt kann zumindest ein weiteres Paar Ventilvorrichtungen im Bereich des oberhalb der Abscheidevorrichtung angeordneten Antriebsmotors, insbesondere im Bereich einer vom Antriebsmotor kommenden Abgasleitung, angeordnet sein. Damit kann unerwünschten Ablagerungen in diesem Bereich begegnet werden.

Bevorzugt kann zumindest ein weiteres Paar Ventilvorrichtungen benachbart zu dem oberhalb des Einlaufbereiches angeordneten Paar Ventilvorrichtungen angeordnet sein, insbesondere im vorderen Drittel des Aggregatgehäuses.

Insbesondere kann zumindest ein Paar Ventilvorrichtung auf einer vom Aggregatgehäuse lösbaren, flächig ausgeführten Wartungsabdeckung angeordnet sein. Durch die lösbar auf dem Aggregatgehäuse angeordnete Wartungsabdeckung wird eine Zugänglichkeit des darunterliegenden Bereiches im Prozessraums ermöglicht. Dabei ist das Paar Ventilvorrichtungen zusammen mit der Wartungsabdeckung vom Aggregatgehäuse lösbar.

Die Abscheidevorrichtung kann als zumindest ein nach dem Axialflussprinzip arbeitender Trennrotor oder als Hordenschüttler ausgeführt sein. Insbesondere bei einer Ausführung der Abscheidevorrichtung mit zumindest einem Trennrotor kann es aufgrund des Wirkprinzips zu Ablagerungen auf einem den zumindest einen Trennrotor abschnittsweise umgebenden, der Oberseite des dem Aggregatgehäuse zugewandten Abscheidegehäuses kommen.

Die vorliegende Erfindung wird nachstehend anhand eines in den Zeichnungen dargestellten Ausführungsbeispieles näher erläutert.

Es zeigen:
- Fig. 1: schematisch und exemplarisch eine Darstellung eines Mähdreschers in Seitenansicht;
- Fig. 2: schematisch und exemplarisch eine perspektivische Ansicht eines Prozessraumes des Mähdreschers;
- Fig. 3: schematisch und exemplarisch eine perspektivische Ansicht eines den Prozessraum umgebenden Aggregatgehäuses;
- Fig. 4: schematisch und exemplarisch eine perspektivische Ansicht einer Ventilvorrichtung; und
- Fig. 5: schematisch und exemplarisch eine perspektivische Ansicht mehrerer paarweise auf einer Wartungsabdeckung angeordneter Ventilvorrichtungen.

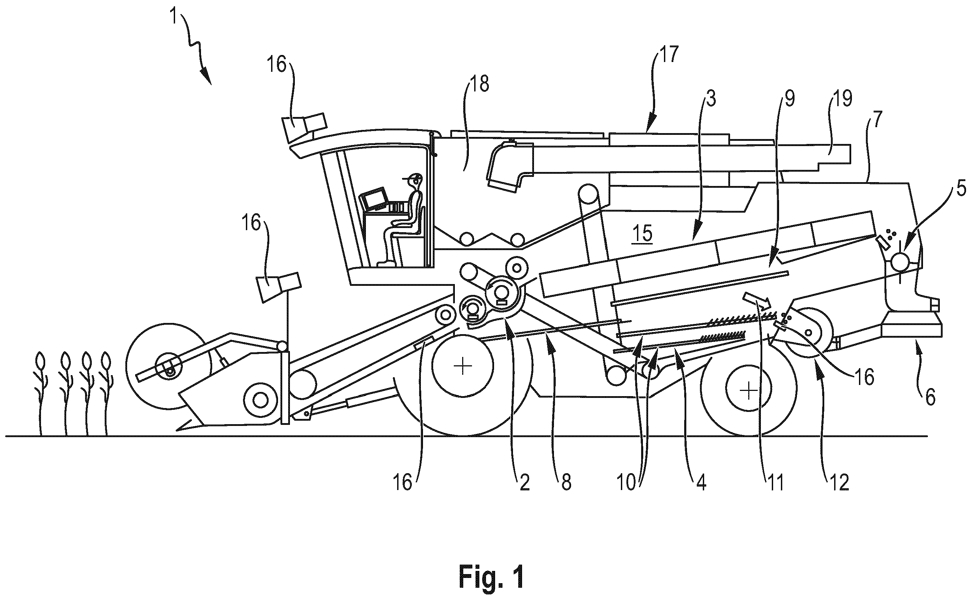

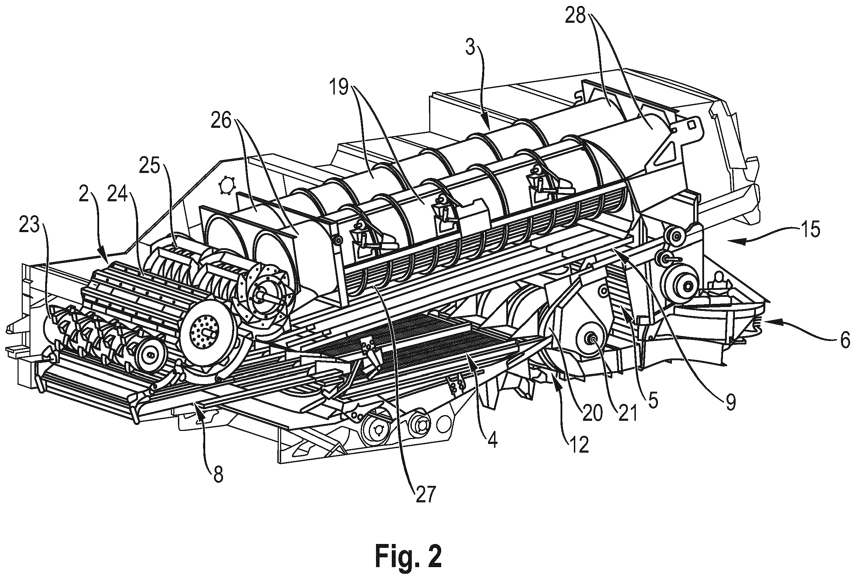

In Fig. 1 ist schematisch und exemplarisch eine Darstellung eines Mähdreschers 1 in Seitenansicht gezeigt. Die Darstellung in Fig. 2 zeigt schematisch und exemplarisch eine perspektivische Ansicht eines Prozessraumes des Mähdreschers 1.

Der Mähdrescher 1 umfasst eine Dreschvorrichtung 2, die als ein Mehrtrommeldreschwerk ausgeführt ist, eine Abscheidevorrichtung 3, die gemäß dem in Fig. 2 dargestellten Ausführungsbeispiel hier und vorzugsweise als ein Paar nach dem Axialflussprinzip arbeitende Trennrotoren ausgeführt ist, eine Reinigungsvorrichtung 4, eine Häckselvorrichtung 5 sowie eine Verteilvorrichtung 6, die hier und vorzugsweise als Radialverteiler ausgeführt ist. Die Abscheidevorrichtung 3 kann alternativ als Hordenschüttler ausgeführt sein.

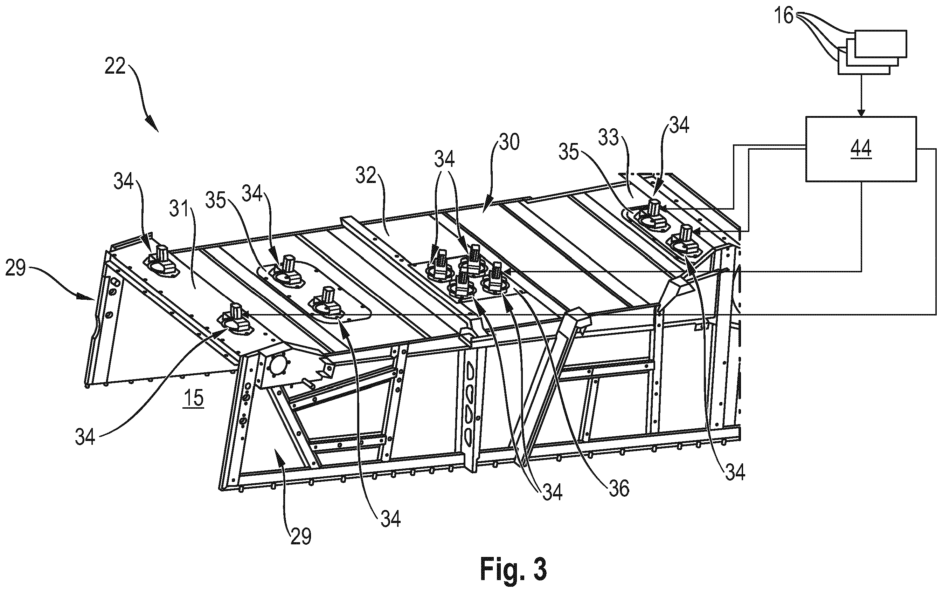

Die Dreschvorrichtung 2, die Abscheidevorrichtung 3, die Reinigungsvorrichtung 4 sowie die Häckselvorrichtung 5 sind zumindest teilweise von einem Maschinengehäuse 7 umgeben. Unterhalb der Dreschvorrichtung 2 ist ein oszillierend angetriebener Vorbereitungsboden 8 angeordnet. Unterhalb der Abscheidevorrichtung 3 ist ein ebenfalls oszillierend angetriebener Rücklaufboden 9 angeordnet, der im Wesentlichen parallel zu der Abscheidevorrichtung 3 geneigt verläuft. Die Reinigungsvorrichtung 4 umfasst zumindest zwei als ein Obersieb und ein Untersieb ausgeführte Reinigungssiebe 10. Der Vorbereitungsboden 8 liegt oberhalb der Siebebene der Reinigungsvorrichtung 4, hier des Obersiebes der Reinigungssiebe 10. Der Reinigungsvorrichtung 4 ist eine Sauggebläsevorrichtung 12 mit zumindest einem Sauggebläse 13 nachgeordnet. Die Sauggebläsevorrichtung 12 weist ein Gebläsegehäuse 20 auf, in welchem zumindest ein Läufer des zumindest einen Sauggebläses 13 um eine horizontal verlaufende Achse 21 rotiert, um einen Saugluftstrom 11 durch am Gebläsegehäuse 20 angeordnete Ansaugöffnungen aus einem Prozessraum 15 des Mähdreschers 1 anzusaugen. Der Prozessraum 15 ist durch zumindest ein Gehäuse abschnittsweise umschlossen. Das zumindest eine Gehäuse umfasst ein Aggregatgehäuse 22, welches in Fig. 3 dargestellt ist. Dabei trennt das zumindest eine den Prozessraum 15 umgebende Aggregatgehäuse 22 die darin angeordneten Arbeitsaggregate zur Bearbeitung des aufgenommenen Erntegutes von anderen Arbeitsaggregaten, wie beispielsweise dem Antriebstrang, der einen als Verbrennungsmotor ausgeführten Antriebsmotor 17 umfasst, oder anderen Baugruppen, wie einen Korntank 18 sowie eine Überladevorrichtung 19 des Mähdreschers 1. Der Prozessraum 15 umfasst den innenliegenden Bereich des Mähdreschers 1, in welchem die Bearbeitung des aufgenommenen Erntegutes zur Trennung von Korn und Nichtkornbestandteilen von den darin angeordneten Arbeitsaggregaten durchgeführt wird und in welchem es daher zu den höchsten Belastungen durch Staub und Kurzstrohpartikel kommt.

In dem Prozessraum 15 sind insbesondere die Dreschvorrichtung 2, die Abscheidevorrichtung 3 sowie die Reinigungsvorrichtung 4 angeordnet. Der dem Prozessraum 15 entnommene Saugluftstrom 11 durchströmt dabei unter anderem die Reinigungssiebe 10 der Reinigungsvorrichtung 4. An das Gebläsegehäuse 20 der Sauggebläsevorrichtung 12 schließt sich ein Kanalsegment 14 an, welches die Sauggebläsevorrichtung 12 mit der Verteilvorrichtung 6 verbindet. Die Sauggebläsevorrichtung 12 saugt einen Luft- und Gutstrom als Saugluftstrom 11 durch zumindest eine der Reinigungsvorrichtung 4 zugewandte Ansaugöffnung an, welcher im Wesentlichen im Bereich der Dreschvorrichtung 2 sowie der Reinigungsvorrichtung 4 als auch unterhalb des Vorbereitungsbodens 8 zugeführt wird. Die Sauggebläsevorrichtung 12 leitet diesen Luft- und Gutstrom nach dem Um- und Durchströmen des Vorbereitungsbodens 8 und der Reinigungsvorrichtung 4 durch das Kanalsegment 14 an die Verteilvorrichtung 6 weiter. Die Sauggebläsevorrichtung 12 kann alternativ aus einer Anordnung von zwei oder mehr um die horizontal verlaufende Achse 21 rotierenden Läufern bestehen, wie in Fig. 2 angedeutet.

Die Darstellung in Fig. 2 zeigt schematisch und exemplarisch eine perspektivische Ansicht des Prozessraumes 15 des Mähdreschers 1 ohne das den Prozessraum 15 abschnittsweise umgebende Aggregatgehäuse 22. Die Dreschvorrichtung 2 umfasst eine Vorbeschleunigertrommel 23, eine Dreschtrommel 24 sowie eine Wendetrommel 25. Ein von der Wendetrommel 25 weitergeleiteter Erntegutstrom, der im Wesentlichen aus Nichtkornbestandteilen, d.h. Stroh, Spreu und dergleichen, sowie von der Dreschvorrichtung 2 nicht ausgeschiedenen Körnern besteht, gelangt in einen Einlaufbereich 26 der Abscheidevorrichtung 3. Dieser Erntegutstrom durchläuft die nach dem Axialflussprinzip arbeitenden Trennrotoren der Abscheidevorrichtung 3 in Längsrichtung, wobei durch an der Unterseite des jeweiligen Trennrotors angeordnete Abscheidesiebe 27 im Wesentlichen Körner auf den Rücklaufboden 9 abgeschieden werden. Der von den Trennrotoren zum Auslaufbereich 28 der Abscheidevorrichtung 3 geförderte restliche Erntegutstrom, der im Wesentlichen aus Stroh besteht, gelangt in die unterhalb des Auslaufbereichs 28 angeordnete Häckselvorrichtung 5 und von dort weiter zur Verteilvorrichtung 6. Alternativ kann der restliche Erntegutstrom unter Umgehung von Häckselvorrichtung 5 und Verteilvorrichtung 6 unmittelbar auf dem Boden abgelegt werden.

Fig. 3 stellt schematisch und exemplarisch eine perspektivische Ansicht des den Prozessraum 15 abschnittsweise umgebenden Aggregatgehäuses 22 dar. Das Aggregatgehäuse 22 weist zwei einander gegenüberliegende vertikale Seitenwände 29 auf, welche durch einen im Wesentlichen horizontal verlaufenden Deckel 30 miteinander verbunden sind. Der Deckel 30 weist einen Vorderabschnitt 31 auf, welcher parallel zum und oberhalb des Einlaufbereichs 26 ausgebildet ist. Weiter weist der Deckel 30 einen Hinterabschnitt 33 auf, welcher parallel zum und oberhalb des Auslaufbereichs 28 ausgebildet ist. Ein zwischen dem Vorderabschnitt 31 und dem Hinterabschnitt 33 befindlicher Mittenabschnitt 32 erstreckt sich oberhalb der Abscheidevorrichtung 3 in Längsrichtung des Mähdreschers 1.

Im Vorderabschnitt 31 sowie im Hinterabschnitt 33 sind hier und vorzugsweise unmittelbar auf dem Deckel 30 zwei Ventilvorrichtungen 34 angeordnet. Auf dem Mittenabschnitt 32 sind weitere Ventilvorrichtungen 34, insbesondere paarweise, angeordnet. Ein Paar Ventilvorrichtungen 34 ist auf einer Wartungsöffnungsabdeckung 35 angeordnet, welche eine Öffnung im Deckel 30 des Aggregatgehäuses 22 verschließt. Die Wartungsöffnungsabdeckung 35 ist lösbar auf dem Deckel 30 angeordnet, insbesondere durch eine Schraubverbindung oder dergleichen.

Das zumindest eine weitere Paar Ventilvorrichtungen 34, welches im Mittenabschnitt 32 angeordnet ist, ist dabei unterhalb einer liegend auf der Oberseite des Mähdreschers 1 angeordneten Kühlvorrichtung angeordnet. Besonders bevorzugt kann das zumindest eine weitere Paar Ventilvorrichtungen 34 unterhalb eines Lüfters der Kühlvorrichtung angeordnet sein. Hierdurch kann einer unerwünschten Ablagerung von Staub und Kurzstrohpartikeln auf der Oberseite des Aggregatgehäuses 22 respektive des Deckels 30 und unterhalb der Kühlvorrichtung begegnet werden, indem diese wiederholt während des Betriebes des Mähdreschers 1 abgesaugt werden.

Zwei weitere Paare mit Ventilvorrichtungen 34 können auf einer Wartungsöffnungsabdeckung 36 angeordnet sein, welche eine Öffnung im Deckel 30 des Aggregatgehäuses 22 verschließen. Die Position der Ventilvorrichtungen 34 und der Wartungsöffnungsabdeckung 36, auf der diese angeordnet sind, korrespondiert hier und vorzugsweise mit dem Bereich, in welchem der Antriebsmotor 17 angeordnet ist. Insbesondere kann die Wartungsöffnungsabdeckung 36 mit den darauf befindlichen Ventilvorrichtungen 34 im Bereich einer vom Antriebsmotor 17 kommenden Abgasleitung 45 angeordnet sein.

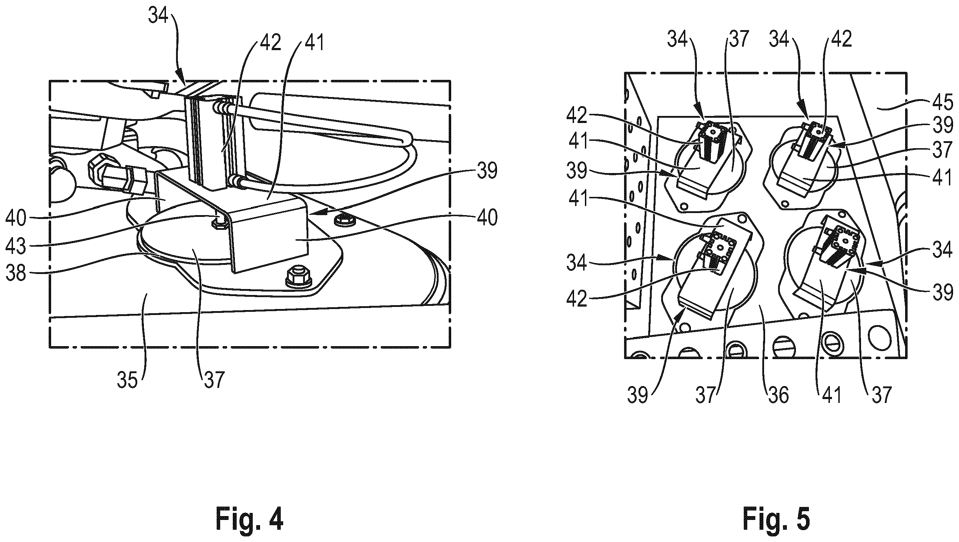

Die Darstellung in Fig. 4 zeigt schematisch und exemplarisch eine perspektivische Ansicht einer Ventilvorrichtung 34. Die zumindest eine Ventilvorrichtung 34 weist ein Verschlusselement 37 auf, welches durch die schaltbare Ventilvorrichtung 34 betätigbar ist. Die schaltbare Ventilvorrichtung 34 ist dazu ausgeführt und eingerichtet ist, von einer geschlossenen Schaltstellung in eine geöffnete Schaltstellung und umgekehrt zu wechseln.

Das in Fig. 4 dargestellte Verschlusselement 37 der Ventilvorrichtung 34 verschließt eine unmittelbar in der Oberseite des Aggregatgehäuses 22 respektive des Deckels 30 angeordnete Öffnung 38. Hier und vorzugsweise weisen die Öffnung 38 und/oder das die Öffnung 38 verschließende Verschlusselement 37 eine im Wesentlichen kreisförmige Außenkontur auf. Hiervon abweichende Formen der Außenkontur von Öffnung 38 und/oder Verschlusselement 37 sind denkbar. Wesentlich ist, dass das Verschlusselement 37 die Öffnung 38 vollständig verschließt bzw. überdeckt.

In der geschlossenen Schaltstellung der Ventilvorrichtung 34 ist die Öffnung 38 durch das Verschlusselement 37 verschlossen. In der geöffneten Schaltstellung der Ventilvorrichtung 34 ist die Öffnung 38 durch das Verschlusselement 37 freigegeben, so dass ein Luftstrom von der Sauggebläsevorrichtung 12 durch die freigegebene Öffnung 38 eingesaugt werden kann.

Eine auf der Oberseite des Aggregatgehäuses 22 angeordnete, im Wesentlichen U-förmige Halterung 39 übergreift die Öffnung 38. Die Halterung 39 weist zwei im Wesentlichen vertikal verlaufende Schenkel 40 auf, mit denen die Halterung 39 beabstandet zur Öffnung 38 auf der Oberseite des Aggregatgehäuses 22 angeordnet ist. Ein zwischen den beiden Schenkeln 40 im Wesentlichen parallel zur Oberseite des Aggregatgehäuses 22 respektive des Deckels 30 verlaufender Steg 41 verbindet die beiden Schenkel 40 miteinander. Auf der dem Deckel abgewandten Oberseite des Stegs 41 ist ein Zylindergehäuse 42 angeordnet. Auf der der Öffnung 38 zugewandten Unterseite des Stegs 41 ist das Verschlusselement 37 angeordnet.

Das Verschlusselement 37 ist am freien Ende einer Kolbenstange 43 angeordnet. Am anderen Ende der Kolbenstange 43 ist ein Kolben angeordnet, der in dem Zylindergehäuse 42 geführt. Der Kolben ist zumindest kolbenstangenseitig mit einem pneumatischen oder hydraulischen Druck beaufschlagbar ist, um die Ventilvorrichtung 34 zu betätigen. Hier und vorzugsweise ist eine pneumatische Druckbeaufschlagung des Kolbens vorgesehen, da diese eine hohe Arbeitsgeschwindigkeit ermöglicht. Das in Fig. 4 dargestellte Ausführungsbeispiel zeigt eine Ausführung der Ventilvorrichtung 34, die nach dem Wirkprinzip eines doppelwirkenden Zylinders arbeitet. Denkbar ist auch eine Ausführung der Ventilvorrichtung 34, die nach dem Wirkprinzip eines einfachwirkenden Zylinders arbeitet.

Die Darstellung in Fig. 5 zeigt schematisch und exemplarisch eine perspektivische Ansicht mehrerer paarweise auf der Wartungsöffnungsabdeckung 36 angeordneter Ventilvorrichtungen 34. Die Ausführung der Ventilvorrichtungen 34 entspricht der vorangehend beschrieben. Die Anordnung der paarweise auf der Wartungsöffnungsabdeckung 36 angeordneten Ventilvorrichtungen 34 ist im Bereich der vom Antriebsmotor 17 kommenden Abgasleitung 45 vorgesehen.

Die dem Prozessraum 15 zugeordnete, zumindest eine schaltbare Ventilvorrichtung 34 ist dazu ausgeführt und eingerichtet, in einer Betriebssituation, in welcher es während des laufenden Betriebs der Sauggebläsevorrichtung 12 zu einer temporären Unterbrechung einer Erntegutverarbeitung durch die übrigen im Prozessraum 15 befindlichen Arbeitsaggregate kommt, temporär von einer geschlossenen Schaltstellung in eine geöffnete Schaltstellung zu wechseln. Temporär heißt hier und vorzugsweise für die Dauer der Unterbrechung einer Erntegutverarbeitung durch die übrigen im Prozessraum 15 befindlichen Arbeitsaggregate. Dabei wird durch die zumindest eine freigegebenen Öffnung 38 durch die Sauggebläsevorrichtung 12 ein Luftstrom angesaugt, welcher im Umgebungsbereich der Öffnung 38 befindlichen Staub und Kurzstrohpartikel in den Prozessraum einsaugt und durch die Sauggebläsevorrichtung 12 über die Verteilvorrichtung 6 im rückwärtigen Bereich des Mähdreschers 1 ausscheidet. Zudem werden von dem durch die zumindest eine freigegebenen Öffnung 38 eingesaugten Luftstrom die im Prozessraum 15 befindlichen Arbeitsaggregate zumindest teilweise umströmt oder durchströmt, so dass auch sich hier befindliche Ablagerungen von Staub und Kurzstrohpartikeln mitgeführt und ausgeschieden werden.

Eine Maschinenreinigung respektive Prozessraumreinigung erfolgt dabei durch den von der Sauggebläsevorrichtung 12 bereitgestellten Saugluftstrom 11 in Betriebssituationen, in denen temporär kein Erntegut im Prozessraum 15 verarbeitet wird, die Sauggebläsevorrichtung 12 jedoch aktiv ist. Eine solche Betriebssituation oder Phase, in welcher es bei laufendem Betrieb der Sauggebläsevorrichtung 12 zu einer temporären Unterbrechung einer Erntegutverarbeitung durch die übrigen im Prozessraum 15 befindlichen Arbeitsaggregate kommt, liegt beispielsweise bei der Vorgewendefahrt vor.

Der Mähdrescher 1 weist zur Ansteuerung der zumindest einen Ventilvorrichtung 34 eine Steuervorrichtung 44 auf. Die Steuerungsvorrichtung 44 ist mit zumindest einer Detektionseinrichtung 16 signaltechnisch verbunden. Die zumindest eine Detektionseinrichtung 16 ist zur Detektion einer temporären Unterbrechung der Erntegutverarbeitung eingerichtet. Die Steuervorrichtung 44 ist dazu eingerichtet ist, die zumindest eine Ventilvorrichtung 34 in Abhängigkeit von den Signalen der zumindest einen Detektionseinrichtung 16 anzusteuern, um die zumindest eine Ventilvorrichtung 34 wechselweise zwischen der geschlossenen Schaltstellung in die geöffnete Schaltstellung zu überführen.

Die zumindest eine Detektionseinrichtung 16 kann als eine optische Vorfelderfassungseinrichtung, als ein Schichthöhensensor im Einzugskanal des Mähdreschers 1, als ein Routenplanungssystem, als ein Fahrgeschwindigkeitssensor und/oder als eine Sensoreinrichtung ausgeführt sein, die dazu eingerichtet ist, einen Erntegutfluss entlang zumindest eines der im Prozessraum 15 angeordneten Arbeitsaggregate zu detektieren.

### Bezugszeichenliste

| | | | |
|---|---|---|---|
| 1 | Mähdrescher | 34 | Ventilvorrichtung |
| 2 | Vorsatzgerät | 35 | Wartungsöffnungsabdeckung |
| 3 | Dreschvorrichtung | 36 | Wartungsöffnungsabdeckung |
| 4 | Abscheidevorrichtung | 37 | Verschlusselement |
| 5 | Reinigungsvorrichtung | 38 | Öffnung |
| 6 | Häckselvorrichtung | 39 | Halterung |
| 7 | Verteilvorrichtung | 40 | Schenkel |
| 8 | Vorbereitungsboden | 41 | Steg |
| 9 | Rücklaufboden | 42 | Zylindergehäuse |
| 10 | Reinigungssieb | 43 | Kolbenstange |
| 11 | Saugluftstrom | 44 | Steuerungsvorrichtung |
| 12 | Sauggebläsevorrichtung | 45 | Abgasleitung |
| 13 | Sauggebläse | | |
| 14 | Kanalsegment | | |
| 15 | Prozessraum | | |
| 16 | Detektionseinrichtung | | |
| 17 | Antriebsmotor | | |
| 18 | Korntank | | |
| 19 | Überladevorrichtung | | |
| 20 | Gebläsegehäuse | | |
| 21 | Achse | | |
| 22 | Aggregatgehäuse | | |
| 23 | Vorbeschleunigertrommel | | |
| 24 | Dreschtrommel | | |
| 25 | Wendetrommel | | |
| 26 | Einlaufbereich | | |
| 27 | Abscheidesieb | | |
| 28 | Auslaufbereich | | |
| 29 | Seitenwand | | |
| 30 | Deckel | | |
| 31 | Vorderabschnitt | | |
| 32 | Mittenabschnitt | | |
| 33 | Hinterabschnitt | | |

## Patentansprüche

1. Selbstfahrender Mähdrescher (1), umfassend eine Dreschvorrichtung (2), eine Abscheidevorrichtung (3), eine Reinigungsvorrichtung (4) sowie eine der Reinigungsvorrichtung (4) nachgeordnete Sauggebläsevorrichtung (12) als Arbeitsaggregate, die in einem Prozessraum (15) angeordnet sind, der durch zumindest ein Gehäuse gebildet ist, welches wenigstens eines der Arbeitsaggregate abschnittsweise umgibt, **dadurch gekennzeichnet, dass** dem Prozessraum (15) zumindest eine schaltbare Ventilvorrichtung (34) zugeordnet ist, die dazu ausgeführt und eingerichtet ist, in einer Betriebssituation, in welcher es während des laufenden Betriebs der Sauggebläsevorrichtung (12) zu einer temporären Unterbrechung einer Erntegutverarbeitung durch die übrigen im Prozessraum (15) befindlichen Arbeitsaggregate kommt, von einer geschlossenen Schaltstellung in eine geöffnete Schaltstellung zu wechseln, wobei der Mähdrescher (1) eine Steuervorrichtung (44) aufweist, die mit zumindest einer Detektionseinrichtung (16), die zur Detektion einer temporären Unterbrechung der Erntegutverarbeitung eingerichtet ist, signaltechnisch verbunden ist, und dass Steuervorrichtung (44) dazu eingerichtet ist, die zumindest eine Ventilvorrichtung (34) in Abhängigkeit von den Signalen der zumindest einen Detektionseinrichtung (16) anzusteuern..

2. Mähdrescher (1) nach Anspruch 1, **dadurch gekennzeichnet, dass** das zumindest eine Gehäuse ein zumindest die Abscheidevorrichtung (3) abschnittsweise umgebendes Aggregatgehäuse (22) ist, welches die darin befindlichen Arbeitsaggregate gegenüber außerhalb dieses Aggregatgehäuses 2) befindlichen Arbeitsaggregaten, insbesondere einem Antriebsmotor (17), räumlich separiert.

3. Mähdrescher (1) nach Anspruch 1 oder 2, **dadurch gekennzeichnet, dass** die zumindest eine Ventilvorrichtung (34) ein Verschlusselement (37) aufweist, das an einem Ende einer Kolbenstange (43) angeordnet ist, und dass am anderen Ende der Kolbenstange (43) ein Kolben angeordnet ist, der in einem Zylindergehäuse (42) der Ventilvorrichtung (34) geführt ist, wobei der Kolben zumindest kolbenstangenseitig mit einem pneumatischen oder hydraulischen Druck beaufschlagbar ist, um die Ventilvorrichtung (34) zu betätigen.

4. Mähdrescher (1) nach einem der Ansprüche 1 bis 3, **dadurch gekennzeichnet, dass** auf einer im Wesentlichen horizontal verlaufenden Oberseite des Aggregatgehäuses (22) zumindest eine Öffnung (38) angeordnet ist, welche durch die zumindest eine Ventilvorrichtung (34) durch einen Wechsel zwischen den Schaltstellungen freigebbar und verschließbar ist.

5. Mähdrescher (1) nach Anspruch 4, **dadurch gekennzeichnet, dass** eine im Wesentlichen U-förmige Halterung (39), die auf der Oberseite des Aggregatgehäuses (22) angeordnet ist, die zumindest eine Öffnung (38) übergreift.

6. Mähdrescher (1) nach Anspruch 5, **dadurch gekennzeichnet, dass** die Halterung (39) zwei im Wesentlichen vertikal verlaufende Schenkel (40) aufweist, mit denen die Halterung (39) beabstandet zur Öffnung (38) auf der Oberseite des Aggregatgehäuses (22) angeordnet ist, sowie einen zwischen den beiden Schenkeln (40) im Wesentlichen parallel zur Oberseite des Aggregatgehäuses (22) verlaufenden Steg (41), auf dessen Oberseite das Zylindergehäuse (42) angeordnet ist und auf dessen der Öffnung (38) zugewandten Unterseite das Verschlusselement (37) angeordnet ist.

7. Mähdrescher (1) nach Anspruch 1, **dadurch gekennzeichnet, dass** die zumindest eine Detektionseinrichtung (16), eine optische Vorfelderfassungseinrichtung, ein Schichthöhensensor im Einzugskanal des Mähdreschers (1), ein Routenplanungssystem, ein Fahrgeschwindigkeitssensor und/oder eine Sensoreinrichtung ist, die dazu eingerichtet ist, einen Erntegutfluss entlang zumindest eines der im Prozessraum (15) angeordneten Arbeitsaggregate zu detektieren.

8. Mähdrescher (1) nach einem der vorangehenden Ansprüche, **dadurch gekennzeichnet, dass** zumindest ein Paar Ventilvorrichtungen (34) oberhalb eines Einlaufbereiches (26) und/oder oberhalb eines Auslaufbereiches (28) der Abscheidevorrichtung (3) angeordnet sind.

9. Mähdrescher (1) nach Anspruch 8, **dadurch gekennzeichnet, dass** zumindest ein weiteres Paar Ventilvorrichtungen (34) oberhalb der Abscheidevorrichtung (3) im Bereich zwischen dem Einlaufbereich (26) und dem Auslaufbereich (28) der Abscheidevorrichtung (3) angeordnet ist.

10. Mähdrescher (1) nach Anspruch 8 oder 9, **dadurch gekennzeichnet, dass** das zumindest eine Paar Ventilvorrichtungen (34) auf einer vom Aggregatgehäuse (22) lösbaren, flächig ausgeführten Wartungsabdeckung (35, 36) angeordnet ist.

11. Mähdrescher (1) nach einem der vorangehenden Ansprüche, **dadurch gekennzeichnet, dass** die Abscheidevorrichtung (3) als zumindest ein nach dem Axialflussprinzip arbeitender Trennrotor oder als Hordenschüttler ausgeführt ist.

## Claims

1. Self-propelled combine harvester (1), comprising a threshing device (2), a separating device (3), a cleaning device (4) and a suction fan device (12), which is arranged downstream of the cleaning device (4), as working units which are arranged in a process chamber (15) formed by at least one housing which partially surrounds at least one of the working units, **characterized in that** the process chamber (15) is assigned at least one switchable valve device (34), which is designed and configured to change from a closed switching position to an open switching position in an operating situation in which, during the ongoing operation of the suction fan device (12), there is a temporary interruption in crop processing by the other working units located in the process chamber (15), wherein the combine harvester (1) has a control device (44) which is signal-connected to at least one detection means (16), which is configured to detect a temporary interruption in the crop processing, and **in that** the control device (44) is configured to activate the at least one valve device (34) depending on the signals of the at least one detection means (16).

2. Combine harvester (1) according to Claim 1, **characterized in that** the at least one housing is a unit housing (22) which partially surrounds at least the separating device (3) and spatially separates the working units located in said unit housing from working units located outside this unit housing 2), in particular a drive motor (17).

3. Combine harvester (1) according to Claim 1 or 2, **characterized in that** the at least one valve device (34) has a closure element (37), which is arranged at one end of a piston rod (43), and **in that** a piston is arranged at the other end of the piston rod (43), which piston is guided in a cylinder housing (42) of the valve device (34), wherein the piston can be acted upon, at least on the piston-rod side, with a pneumatic or hydraulic pressure in order to actuate the valve device (34).

4. Combine harvester (1) according to any one of Claims 1 to 3, **characterized in that** at least one opening (38) is arranged on a substantially horizontal upper side of the unit housing (22), which opening can be opened up and closed by the at least one valve device (34) by changing between the switching positions.

5. Combine harvester (1) according to Claim 4, **characterized in that** a substantially U-shaped bracket (39), which is arranged on the upper side of the unit housing (22), engages over the at least one opening (38).

6. Combine harvester (1) according to Claim 5, **characterized in that** the bracket (39) has two substantially vertical legs (40) with which the bracket (39) is spaced apart from the opening (38) on the upper side of the unit housing (22), and a web (41) which runs between the two legs (40) substantially parallel to the upper side of the unit housing (22), on the upper side of which web the cylinder housing (42) is arranged and on the lower side of which web facing the opening (38) the closure element (37) is arranged.

7. Combine harvester (1) according to Claim 1, **characterized in that** the at least one detection means (16) is an optical forefield detection means, a layer height sensor in the intake channel of the combine harvester (1), a route planning system, a travel speed sensor and/or a sensor means, which is configured to detect a crop flow along at least one of the working units arranged in the process chamber (15).

8. Combine harvester (1) according to any one of the preceding claims, **characterized in that** at least one pair of valve devices (34) is arranged above an inlet region (26) and/or above an outlet region (28) of the separating device (3).

9. Combine harvester (1) according to Claim 8, **characterized in that** at least one further pair of valve devices (34) is arranged above the separating device (3) in the region between the inlet region (26) and the outlet region (28) of the separating device (3).

10. Combine harvester (1) according to Claim 8 or 9, **characterized in that** the at least one pair of valve devices (34) is arranged on a flat maintenance cover (35, 36) that can be detached from the unit housing (22).

11. Combine harvester (1) according to any one of the preceding claims, **characterized in that** the separating device (3) is designed as at least one separating rotor operating on the basis of the axial flow principle or as a straw walker.

## Revendications

1. Moissonneuse-batteuse automotrice (1) comprenant un dispositif de battage (2), un dispositif de séparation (3), un dispositif de nettoyage (4) ainsi qu'un dispositif de soufflage aspirant (12) disposé en aval du dispositif de nettoyage (4) en tant que groupes de travail qui sont disposés dans un espace de processus (15), lequel est formé par au moins un boîtier qui entoure par portions au moins l'un des groupes de travail, **caractérisée en ce qu'**au moins un dispositif de vanne commutable (34) est associé à l'espace de processus (15), lequel est réalisé et conçu pour, dans une situation de fonctionnement dans laquelle, pendant le fonctionnement du dispositif de soufflage aspirant (12), il se produit une interruption temporaire d'un traitement du produit récolté par les autres groupes de travail qui se trouvent dans l'espace de processus (15), passer d'une position de commutation fermée à une position de commutation ouverte, la moissonneuse-batteuse (1) possédant un dispositif de commande (44) qui est relié signalétiquement à au moins un appareil de détection (16) qui est conçu pour la détection d'une interruption temporaire du traitement du produit récolté, et **en ce que** le dispositif de commande (44) est conçu pour commander l'au moins un dispositif de vanne (34) en fonction des signaux de l'au moins un appareil de détection (16).

2. Moissonneuse-batteuse (1) selon la revendication 1, **caractérisée en ce qu'**au moins un boîtier est un boîtier de groupe (22) qui entoure par portions au moins le dispositif de séparation (3) et qui sépare spatialement les groupes de travail qui s'y trouvent par rapport aux groupes de travail situés en dehors de ce boîtier de groupe 2), en particulier un moteur d'entraînement (17).

3. Moissonneuse-batteuse (1) selon la revendication 1 ou 2, **caractérisée en ce que** l'au moins un dispositif de vanne (34) possède un élément de fermeture (37) qui est disposé à une extrémité d'une tige de piston (43), et **en ce qu'**à l'autre extrémité de la tige de piston (43) est disposé un piston, qui est guidé dans un boîtier de cylindre (42) du dispositif de vanne (34), le piston pouvant être soumis à une pression pneumatique ou hydraulique au moins du côté de la tige de piston afin d'actionner le dispositif de vanne (34).

4. Moissonneuse-batteuse (1) selon l'une des revendications 1 à 3, **caractérisée en ce qu'**au moins une ouverture (38) est disposée sur un côté supérieur qui suit un tracé sensiblement horizontal du boîtier de groupe (22), laquelle peut être libérée et fermée par l'au moins un dispositif de vanne (34) par une alternance entre les positions de commutation.

5. Moissonneuse-batteuse (1) selon la revendication 4, **caractérisée en ce qu'**un support (39) sensiblement en forme de U, qui est disposé sur le côté supérieur du boîtier de groupe (22), qui recouvre l'au moins une ouverture (38).

6. Moissonneuse-batteuse (1) selon la revendication 5, **caractérisée en ce que** le support (39) possède deux branches (40) qui suivent un tracé sensiblement vertical, avec lesquelles le support (39) est disposé à distance de l'ouverture (38) sur le côté supérieur du boîtier de groupe (22), ainsi qu'un élément jointif (41) entre les deux branches (40), qui suit un tracé sensiblement parallèle au côté supérieur du boîtier de groupe (22), sur le côté supérieur duquel est disposé le boîtier de cylindre (42) et sur le côté inférieur faisant face à l'ouverture (38) duquel est disposé l'élément de fermeture (37) .

7. Moissonneuse-batteuse (1) selon la revendication 1, **caractérisée en ce que** l'au moins un appareil de détection (16) est un appareil de détection optique de champ en amont, un capteur de hauteur de couche dans le canal d'alimentation de la moissonneuse-batteuse (1), un système de planification d'itinéraire, un capteur de vitesse de déplacement et/ou un dispositif capteur, lequel est conçu pour détecter un flux de produit récolté le long d'au moins l'un des groupes de travail disposés dans l'espace de processus (15).

8. Moissonneuse-batteuse (1) selon l'une des revendications précédentes, **caractérisée en ce qu'**au moins une paire de dispositifs de vanne (34) sont disposées au-dessus d'une zone d'entrée (26) et/ou au-dessus d'une zone de sortie (28) du dispositif de séparation (3).

9. Moissonneuse-batteuse (1) selon la revendication 8, **caractérisée en ce qu'**au moins une paire de dispositifs de vanne (34) supplémentaire est disposée au-dessus du dispositif de séparation (3) dans la zone entre la zone d'entrée (26) et la zone de sortie (28) du dispositif de séparation (3).

10. Moissonneuse-batteuse (1) selon la revendication 8 ou 9, **caractérisée en ce que** l'au moins une paire de dispositifs de vanne (34) est disposée sur un capot de maintenance (35, 36) réalisé de forme plane, pouvant être détaché du boîtier de groupe (22).

11. Moissonneuse-batteuse (1) selon l'une des revendications précédentes, **caractérisée en ce que** le dispositif de séparation (3) est réalisé sous la forme d'au moins un rotor de séparation fonctionnant selon le principe du flux axial ou sous la forme d'un secoueur à claies.
